# EUROPÄISCHE PATENTANMELDUNG

(11) **EP 2 929 776 A1**
(43) Veröffentlichungstag der Anmeldung: **14.10.2015**
(21) Anmeldenummer: 15154411.1
(22) Anmeldetag: 10.02.2015
(51) Int. Cl.: A01F 15/08

(54) **Landwirtschaftliche Ballenpresse**

(30) Priorität: 08.04.2014 DE 102014104932
(71) Anmelder: Usines Claas France S.A.S, 57140 St. Rémy / Woippy (FR)
(72) Erfinder: Scharf, Thorsten, 66693 Mettlach (DE)
(74) Vertreter: Budach, Steffen

(57) **Zusammenfassung**

Eine landwirtschaftliche Ballenpresse, insbesondere Quaderballenpresse (1) mit zumindest einem Arbeitsaggregat (2, 3, 4, 5, 6) zur Verarbeitung und/oder Förderung von Erntegut (7), wobei das Arbeitsaggregat (2, 3, 4, 5, 6) mittels eines Antriebsstrangs (10) antreibbar ist, zeichnet sich aus durch Energiewandlungsmittel (20, 21; 30, 31), mit denen sich kinetische Energie, die das Arbeitsaggregat (2, 3, 4, 5, 6) und/oder der Antriebsstrang (10) in einem Antriebszustand innehat, zumindest teilweise in eine speicherbare Energieform umformen lässt, sowie einen Energiespeicher (23, 32) zur Speicherung der so gewandelten Energie.

## Beschreibung

Die Erfindung betrifft eine landwirtschaftliche Ballenpresse gemäß dem Oberbegriff des Anspruchs 1.

Landwirtschaftliche Ballenpressen werden dazu eingesetzt, auf dem Feld liegendes halmartiges Erntegut, insbesondere Stroh oder Heu aufzusammeln, ggf. weiter zu zerkleinern und zu Ballen zu verdichten (zu "pressen"). Dazu verfügen Ballenpressen über verschiedene Arbeitsaggregate, die der erforderlichen Förderung und/oder Verarbeitung des Ernteguts dienen. Die Arbeitsaggregate stehen üblicherweise mit einem zentralen Antriebsstrang der Ballenpresse in Antriebsverbindung. Es sei beispielhaft auf die EP 0 819 375 A1 verwiesen, welche eine Antriebsanordnung für eine Quaderballenpresse zeigt, bei welcher zumindest ein Schneidrotor, ein Raffer und ein Presskolben über den zentralen Antriebsstrang antreibbar sind.

Da Ballenpressen in der Regel als Anbaugeräte konzipiert sind und demzufolge über keine eigene Energieversorgung verfügen, steht der zentrale Antriebsstrang der Ballenpresse beim Ernteeinsatz mit einem Zapfwellenabtrieb des die Ballenpresse ziehenden Fahrzeugs - zumeist einem "Traktor" - in Antriebsverbindung, um von diesem über dessen Zapfwellenabtrieb mit mechanischer Antriebsenergie versorgt zu werden.

Der Antriebsstrang von Quaderballenpressen (vgl. EP 0 819 375 A1) weist einen Presskolbenantrieb auf. Dabei dient üblicherweise eine Kurbelwelle mit entsprechend angelenkter Pleuelstangenanordnung dazu, eine über Antriebswellen und ggf. Getriebe auf die Kurbelwelle übertragene Rotationsbewegung in eine translatorische Hin- und Herbewegung ("Oszillieren") des Presskolbens umzuformen. Die im Pressbetrieb ständig erfolgende Hin- und Herbewegung des Presskolbens, der zur Erzielung einer gewünschten Wucht beim Auftreffen auf das Erntegut eine nicht unerhebliche Masse aufweisen muss, steht dabei in Wechselwirkung mit dem zugeordneten Antriebsstrang. Das heißt, dass die periodischen Kolbenhübe eine ebenfalls periodische Rückwirkung auf den gesamten vorgelagerten Antriebsstrang ausüben. Zum Schutz zumindest einiger Komponenten des Antriebsstrangs, insbesondere zum Schutz des Zapfwellenantriebsstrangs des Traktors vor periodischen Lastspitzen ist dem Antriebsstrang von Quaderballenpressen daher ein Schwungrad zugeordnet. Dessen bewusst hoch gewähltes Massenträgheitsmoment sorgt dafür, die durch den Presskolbenantrieb bedingten periodischen "Laststöße" in möglichst hohem Maße abzufangen. In heutigen Quaderballenpressen verwendete Schwungräder weisen dazu beispielsweise Massen von einigen hundert Kilogramm auf.

Das aus dem genannten Grund einerseits gewollt hohe Massenträgheitsmoment des Antriebsstrangs hat andererseits auch zur Folge, dass sich der in einem Antriebszustand (d.h. bei Betriebsdrehzahl) befindende Antriebsstrang nur mit verhältnismäßig hohem mechanischem Aufwand zum Stillstand bringen lässt. Dabei kann herkömmlicherweise eine am Umfang des Schwungrads angreifende Bandbremse zum Einsatz kommen, welche die kinetische Energie, die der Antriebsstrang im Antriebszustand innehat, in Form von Wärme an die Umgebung abführt. Soll der Antriebsstrang wieder in den Antriebszustand (von Drehzahl null auf Betriebsdrehzahl) versetzt werden, ist umgekehrt wieder ein verhältnismäßig hoher mechanischer Aufwand für die Beschleunigung erforderlich. Da der antreibende Traktor den Antriebsstrang nur langsam in Bewegung versetzen kann, zieht sich der Startvorgang durchaus über einen nicht unerheblichen Zeitraum hin und erfordert dabei Antriebsenergie.

In der Praxis kann ein Abbremsen und Neustarten (bzw. Wiederbeschleunigen) des Antriebsstrangs bei Quaderballenpressen mehrmals während eines Arbeitseinsatzes erforderlich sein, beispielsweise im Überlastungsfall einzelner Arbeits- und/oder Förderaggregate oder bei sonstigen Arbeitsunterbrechungen.

Es ist eine Aufgabe der vorliegenden Erfindung, eine Ballenpresse der genannten Art anzugeben, welche in Bezug auf ein während des Betriebs erforderliches Stillsetzen des Antriebsstrangs in der Funktion verbessert ist. Insbesondere soll dies in kürzerer Zeit unter weitestgehender Vermeidung von Energieverlusten durchführbar sein.

Die genannte Aufgabe wird gelöst durch eine Ballenpresse mit den Merkmalen des Anspruchs 1. Diese zeichnet sich aus durch Energiewandlungsmittel, mit denen sich kinetische Energie, die das Arbeitsaggregat und/oder der Antriebsstrang in einem Antriebszustand innehat, zumindest teilweise in eine speicherbare Energieform umformen lässt, sowie einen Energiespeicher zur Speicherung der so gewandelten Energie. Die zuvor genannte Aufgabe wird damit vorteilhaft gelöst.

Erfindungsgemäß wurde dabei zunächst erkannt, dass der Antriebsstrang und/oder ein Arbeitsaggregat einer Ballenpresse im Antriebszustand in der Regel eine erhebliche kinetische Energie ("Bewegungsenergie") innehat. Diese ergibt sich - neben der im Antriebszustand erreichten Drehzahl - insbesondere aus dem üblicherweise hohen Massenträgheitsmoment des Antriebsstrangs. Das hohe Massenträgheitsmoment wird bei Ballenpressen der in Rede stehenden Art bewusst durch ein dem Antriebsstrang zugeordnetes Schwungrad geschaffen. Erfindungsgemäß wurde es als vorteilhafte Maßnahme erachtet, diese kinetische Energie, die der Antriebsstrang im Antriebszustand innehat, im Fall der Notwendigkeit des Abbremsens des Antriebsstrangs in eine speicherbare Energieform umzuformen und zum Zweck einer - wie auch immer gearteten - späteren Nutzung zu speichern. Es kann sich dabei grundsätzlich um jedwede Art von Energiewandlungsmittel sowie um jedwede Art von zugehörigem Energiespeicher handeln, die zum genannten Zweck geeignet sind. Der genannte erfindungsgemäße Effekt lässt sich im Übrigen auch erzielen, wenn die kinetische Energie nur teilweise in eine speicherbare Energieform umgeformt wird. So ist es denkbar, das Arbeitsaggregat und/oder den Antriebsstrang nicht zum vollständigen Stillstand, sondern von einem Antriebszustand mit höherer kinetischer Energie in einen Antriebszustand mit demgegenüber niedrigerer kinetischer Energie zu bringen, wobei in diesem Fall zumindest die Energiedifferenz zwischen beiden Zuständen im Energiespeicher speicherbar ist.

Vorteilhaft umfassen die Energiewandlungsmittel eine Umformeinrichtung, die mit einer Komponente des Antriebsstrangs und/oder des Arbeitsaggregats in Antriebsverbindung bringbar ist, um kinetische Energie des Antriebsstrangs und/oder des Arbeitsaggregats in die speicherbare Energieform umzuformen. Dabei kann es sich um jedwede Art von Umformeinrichtung handeln, die zur Wandlung kinetischer Energie in eine speicherbare Energieform geeignet ist.

Die Umformeinrichtung kann zum genannten Zweck grundsätzlich mit verschiedenen Komponenten des Antriebsstrangs und/oder einem Arbeitsaggregat antriebsverbunden werden. Gemäß einer vorteilhaften Weiterbildung der Ballenpresse handelt es sich bei der Komponente des Antriebsstrangs um ein Eingangsgetriebe, ein Schwungrad oder ein Hauptgetriebe der Ballenpresse.

Gemäß einer bevorzugten Weiterbildung der Erfindung ist die Umformeinrichtung als eine Hydropumpe, eine Pneumatikpumpe, ein elektrischer Generator und/oder ein mechanisches Getriebe nutzbar. Entsprechend handelt es sich dann bei dem Energiespeicher um einen hydraulischen Druckspeicher ("Speicherblase"), einen pneumatischen Druckspeicher, einen elektrischen Energiespeicher (beispielsweise eine Batterie, einen Kondensator) und/oder einen mechanischen Energiespeicher (vorzugsweise in Form eines Federspeichers).

Der Antriebsstrang der Ballenpresse kann auf für sich bekannte Weise zum Antrieb mehrerer Arbeitsaggregate dienen, wie insbesondere: Pickup, Rotor, Raffer, Presskolben, Knoteinrichtung. Gemäß einer zweckmäßigen Ausführungsform umfasst der Antriebsstrang die folgenden Komponenten: eine Wellenanordnung, die eingangsseitig mit einer Antriebsmaschine, insbesondere mit einem Zapfwellenabtrieb beispielsweise eines Traktors kuppelbar ist, um von der Antriebsmaschine angetrieben zu werden; ein mit der Wellenanordnung in Antriebsverbindung stehendes Schwungrad; und ein über die Wellenanordnung antreibbares Hauptgetriebe, das insbesondere dazu dient, eine eingehende mechanische Leistung auf eine oder mehrere Ausgangsleistungen zum Antrieb des zumindest einen Arbeitsaggregates zu verzweigen.

Eine vorteilhafte Weiterbildung der Ballenpresse zeichnet sich aus durch Mittel zur ereignisabhängigen Einleitung der Wandlung kinetischer Energie des Antriebsstrangs und/oder des Arbeitsaggregats in speicherbare Energie mit dem Ziel, den Antriebsstrang und/oder das Arbeitsaggregat zu bremsen. Zu diesem Zweck kann die Ballenpresse insbesondere über eine Steuereinrichtung verfügen, die bei Erkennung einer Überlastung einer Komponente des Antriebsstrangs und/oder eines Arbeitsaggregats der Ballenpresse den Antriebsstrang und/oder das Arbeitsaggregat durch Einleitung der Wandlung kinetischer Energie in speicherbare Energie abbremst. In diesem Fall wird der Bediener der Ballenpresse von einer entsprechenden Überwachung entlastet und das Abbremsen erfolgt zuverlässig innerhalb einer kurzen Reaktionszeit.

Eine besonders vorteilhafte Weiterbildung der Erfindung sieht vor, dass die Energiewandlungsmittel auch in einem Energierückgewinnungsmodus betreibbar sind, um dem Energiespeicher zugeführte Energie zurückzuwandeln in kinetische Energie des Antriebsstrangs und/oder des Arbeitsaggregats, um einen Antriebszustand wiederherzustellen. Mit anderen Worten, erfolgt im Energierückgewinnungsmodus ("Rekuperation") eine Funktionsumkehr in dem Sinne, dass nun die Energiewandlungsmittel vom Energiespeicher mit darin gespeicherter Energie versorgt werden und diese zurückwandeln in kinetische Energie des Antriebsstrangs bzw. des Arbeitsaggregats. Auf diese Weise lässt sich die im Energiespeicher zwischengespeicherte Energie - die zuvor beim Abbremsen des Antriebsstrangs in speicherbare Energie umgeformt wurde - vorteilhaft nutzen, um den Antriebsstrang wieder in Bewegung zu versetzen (oder ggf. dessen noch stattfindende Bewegung wieder zu beschleunigen). Ein ursprünglicher Antriebszustand lässt sich auf diese Weise besonders schnell und insbesondere mit nur geringem Energieaufwand zumindest annähernd (abzüglich Reibungsverlusten) wiederherstellen.

Zu diesem Zweck ist im Energierückgewinnungsmodus vorteilhaft die Umformeinrichtung mit einer Komponente des Antriebsstrangs und/oder des Arbeitsaggregats in Antriebsverbindung bringbar und lässt sich als ein Hydromotor, ein Pneumatikmotor, ein elektrischer Motor und/oder ein mechanisches Getriebe nutzen, insbesondere um den Antriebsstrang und/oder ein Arbeitsaggregat damit anzutreiben.

Die beschriebene Ballenpresse bietet den Vorteil, dass sich deren Antriebsstrang nach einem Abbremsen - beispielsweise bedingt durch eine Überlast an einem Arbeitsaggregat - mit nur geringem Energieaufwand wieder in den ursprünglichen Antriebszustand versetzen lässt.

Die Erfindung wird nachfolgend anhand von verschiedenen Ausführungsbeispielen näher erläutert. Dazu sei auf die beigefügte Zeichnung mit den Fig. 1 bis 6 verwiesen. Darin zeigt:
- Fig. 1: eine Kombination aus einem Traktor und einer Ballenpresse in schematischer Seitenansicht,
- Fig. 2: einen Antriebsstrang einer Ballenpresse in schematischer Seitenansicht,
- Fig. 3: einen Antriebsstrang einer Ballenpresse mit hydraulischer Energierückgewinnung am Eingangsgetriebe,
- Fig. 4: einen Antriebsstrang einer Ballenpresse mit elektrischer Energierückgewinnung am Eingangsgetriebe,
- Fig. 5: einen Antriebsstrang einer Ballenpresse mit hydraulischer Energierückgewinnung am Schwungrad,
- Fig. 6: einen Antriebsstrang einer Ballenpresse mit hydraulischer Energierückgewinnung am Hauptgetriebe.

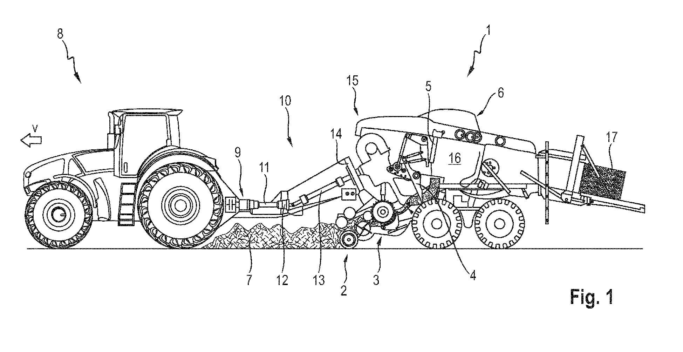

Fig. 1 zeigt in einer schematischen Seitenansicht eine Kombination aus einem Traktor 8 und einer Quaderballenpresse 1. Der Traktor 8 zieht die Quaderballenpresse 1 mit einer Geschwindigkeit v über ein Feld. Heckseitig verfügt der Traktor 8 auf für sich bekannte Weise über einen Zapfwellenabtrieb 9, um die Quaderballenpresse 1 mit mechanischer Antriebsenergie zu versorgen.

Die Quaderballenpresse 1 (im Folgenden kurz "Ballenpresse") verfügt über eine Vielzahl von Arbeitsaggregaten, welche zur Förderung und/oder Verarbeitung von Erntegut 7 dienen, das zunächst auf dem Feldboden liegt und das von der Ballenpresse 1 aufgenommen wird, um durch Arbeitsaggregate der Ballenpresse 1 zu Quaderballen 17 gepresst zu werden. Fertig gepresste Quaderballen 17 verlassen die Ballenpresse 1 heckseitig, um wieder auf das Feld abgeworfen zu werden.

Die Ballenpresse 1 ist unter anderem mit einer Pickup 2, einem Schneidrotor 3, einem Raffer 4, einem Presskolben 5, einer Knoteinrichtung 6 ausgestattet. Dabei dient die Pickup 2 dazu, auf dem Feldboden - zumeist in Form eines sogenannten Schwads - liegendes Erntegut 7 aufzunehmen und dieses den nachgelagerten Förder- und/oder Verarbeitungsaggregaten zuzuführen. Das so aufgenommene Erntegut 7 erreicht nach Verlassen der Pickup 2 den Schneidrotor 3 (optional), der eine weitere Zerkleinerung des Ernteguts 7 bewirkt. Anschließend gelangt das Erntegut 7 in einen Zuführkanal, in welchem ein Raffer 4 durch periodische Füll- und Sammelhubbewegungen eine Vorverdichtung für und Förderung des Ernteguts 7 in die Presskammer 16 durchführt. In der Presskammer 16 ist ein Presskolben 5 translatorisch beweglich gelagert. Der Presskolben 5 wird über einen (hier nicht näher dargestellten, jedoch beispielsweise wie in der EP 0 819 375 A1 beschriebenen) Presskolbenantrieb in oszillierende Bewegungen versetzt, d.h. der Presskolben 5 bewegt sich in Richtung der Längserstreckung der Presskammer 16 periodisch hin und her.

Die Arbeitsaggregate der Ballenpresse 1, insbesondere die Pickup 2, der Rotor 3, der Raffer 4, der Presskolben 5 sowie die oberhalb der Presskammer 16 angeordnete Knoteinrichtung 6 werden über einen zentralen Antriebsstrang 10 der Ballenpresse 1 angetrieben. Dieser Antriebsstrang 10 umfasst im Wesentlichen eine Eingangswelle 11, die mit dem Zapfwellenabtrieb 9 des Traktors 8 in Antriebsverbindung steht, um vom Traktor 8 mechanisch angetrieben zu werden, ein Eingangsgetriebe 12, eine Gelenkwelle 13, ein Schwungrad 14 und ein Hauptgetriebe 15. Eine vom Traktor 8 über den Zapfwellenabtrieb 9 bereitgestellte Antriebsleistung wird somit über den Antriebsstrang 10 zum Hauptgetriebe 15 übertragen, um von dort aus an einzelne Verbraucher (Pickup 2, Rotor 3, Raffer 4, Presskolben 5, Knoteinrichtung 6) der Ballenpresse 1 verteilt zu werden.

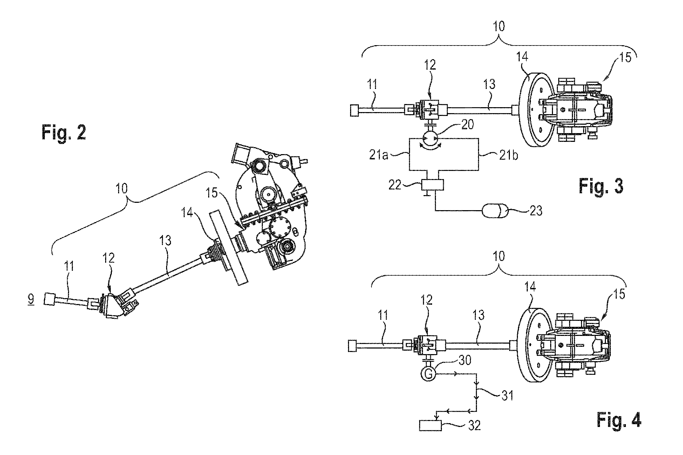

Fig. 2 zeigt in vergrößerter schematischer Seitendarstellung die zuvor genannten Komponenten des Antriebsstrangs 10 einer wie in Fig. 1 gezeigten Ballenpresse 1. Es sei angemerkt, dass der gezeigte Antriebsstrang 10 aufgrund des zwischen Gelenkwelle 13 und Hauptgetriebe 15 angeordneten Schwungrads 14 ein gezielt erhöhtes Trägheitsmoment aufweist. Dieses sorgt für einen Schutz des traktorseitigen Zapfwellenabtriebs 9 vor periodischen Lastspitzen, die sich insbesondere aus Wechselwirkung beim Kolbenantrieb (periodische Hin- und Herbewegung des Presskolbens 5) ergeben.

Befindet sich die Ballenpresse 1 in einem Antriebszustand, indem sich Komponenten (z.B. Eingangswelle 11, Gelenkwelle 13, Schwungrad 14) des Antriebsstrangs 10 in Rotation befinden, bewirkt das hohe Trägheitsmoment des Antriebsstrangs 10, dass sich dieser nur mit verhältnismäßig hohem mechanischem Aufwand zum Stillstand bringen lässt. Dabei kann beispielsweise eine am Umfang des Schwungrads 14 angreifende Bandbremse (nicht gezeigt) zum Einsatz kommen, welche die kinetische Energie, die der Antriebsstrang 10 im Antriebszustand innehat, in Form von Wärme an die Umgebung abführt. Soll der Antriebsstrang 10 wieder in den Antriebszustand (beispielweise von einer Drehzahl null auf eine Betriebsdrehzahl) versetzt werden, ist umgekehrt wiederum ein verhältnismäßig hoher mechanischer Aufwand zur Beschleunigung des Antriebsstrangs 10 erforderlich. Da der antreibende Traktor 8 den Antriebsstrang 10 - mitsamt davon angetriebenen Arbeitsaggregaten - nur langsam in Bewegung versetzen kann, zieht sich der Startvorgang durchaus über einen nicht unerheblichen Zeitraum hin und erfordert dabei viel Energie.

Im praktischen Einsatz der Ballenpresse 1 kann ein Abbremsen und Beschleunigen des Antriebsstrangs 10 mehrmals während eines Arbeitseinsatzes erforderlich sein, beispielsweise im Überlastungsfall einzelner Arbeits- und/oder Förderaggregate (beispielsweise bei Blockierungen verursacht durch Erntegut) oder ganz allgemein bei Arbeitsunterbrechungen. Ein Abbremsen in diesem Zusammenhang kann auch die Reduzierung einer vorliegenden Antriebsdrehzahl auf eine demgegenüber geringere Drehzahl (größer null) beinhalten, wenn es beispielsweise an der Ballenpresse bauartbedingt möglich ist, eine Überlastung bereits bei Betrieb mit reduzierter Drehzahl zu beseitigen. Nach Beseitigung der Überlastung kann der Antriebsstrang wieder auf die ursprüngliche Antriebsdrehzahl beschleunigt werden.

In den Fig. 3 bis 6 sind nun in verschiedenen Ausführungsbeispielen Möglichkeiten gezeigt, wie sich das Stillsetzen bzw. Wiederanlaufen des Antriebsstrangs 10 verkürzen sowie mit geringerem Energiebedarf durchführen lässt. Es handelt sich bei den in den Fig. 3 bis 6 gezeigten Ausführungsbeispielen um Varianten hinsichtlich der dabei zum Einsatz kommenden Art der Energieumformung (mechanisch-hydraulisch/mechanischelektrisch) sowie möglicher Einbauorte innerhalb des Antriebsstrangs 10. Für einen Fachmann wird ersichtlich, dass sich die Varianten auch miteinander kombinieren lassen.

In Fig. 3 ist ein Antriebsstrang 10 einer Ballenpresse 10 mit hydraulischer Energierückgewinnung am Eingangsgetriebe 12 gezeigt. Dazu ist am Eingangsgetriebe 12 des Antriebsstrangs 10 eine hydrostatische Pumpe-/Motoreinheit 20 angeordnet. Diese ist über hydraulische Leitungen 21 a, 21 b mit einer Regeleinheit 22 (Wegeventil) verbunden, die wiederum mit einem Tank und mit einer hydraulischen Speichereinheit 23 ("Speicherblase") verbunden ist. Das so geschaffene hydraulische System lässt sich folgendermaßen nutzen:
In einem ersten Betriebsmodus ist die hydrostatische Pumpe-/Motoreinheit 20 im Sinne einer Pumpe betreibbar. Die Pumpe 20 wird mit dem Eingangsgetriebe 12 in Antriebsverbindung gebracht. Auf diese Weise lässt sich kinetische Energie, die der sich in einem Antriebszustand befindende Antriebsstrang 10 innehat, dazu nutzen, die Pumpe 20 anzutreiben. Die Pumpe 20 zieht hydraulische Flüssigkeit aus dem Tank über die Regeleinheit 22 und die Leitung 21 a in die Pumpe 20 und fördert diese von dort aus über die Leitung 21 b und die Regeleinheit 22 in die hydraulische Speichereinheit 23. In der Speichereinheit 23 baut sich mit steigender Menge geförderter hydraulischer Flüssigkeit ein zunehmender Druck auf. Der dabei auftretende hydraulische Widerstand erschwert die Förderleistung der Pumpe und bewirkt somit ein Abbremsen des Antriebsstrangs 10 auf null (oder auf einen gewünschten Wert größer null, wenn der Druckaufbau zuvor durch Öffnen der Regeleinheit 22 abgebrochen wird).
In einem zweiten Betriebsmodus (Energierückgewinnungsmodus), der bei Bedarf wie beispielsweise nach Behebung einer Überlast aktivierbar ist, wird die hydrostatische Pumpe-/Motoreinheit 20 im Sinne eines Motors betrieben. Der Motor 20 wird dazu mit dem Eingangsgetriebe 12 in Antriebsverbindung gebracht. Die in der Speichereinheit 23 gespeicherte Druckenergie wird nun dazu genutzt, über die Regeleinheit 22 und die Leitung 21 a den Motor 20 und damit den Antriebsstrang 10 anzutreiben. Die dabei durch den Motor 20 geförderte hydraulische Flüssigkeit fließt über die Leitung 21 b und die Regeleinheit 22 in Tank ab. Auf diese Weise lässt sich die in der Speichereinheit 23 gespeicherte Energie dazu nutzen, den Antriebsstrang 10 wieder zu beschleunigen, um einen vorigen Antriebszustand - zumindest annähernd (Reibungsverluste werden stets zu einem gewissen Verlust führen) - wiederherzustellen.

In Fig. 4 ist (in Alternative zu dem in Fig. 3 gezeigten Beispiel) ein Antriebsstrang 10 einer Ballenpresse 10 mit elektrischer Energierückgewinnung am Eingangsgetriebe 12 gezeigt. Dazu ist am Eingangsgetriebe 12 des Antriebsstrangs 10 eine elektrische Generator-/Motoreinheit 30 angeordnet. Diese ist über eine elektrische Leitung 31 mit einer elektrischen Regel- und Speichereinheit 32 (Steuerschaltung einschließlich Batterie) verbunden. Das so geschaffene elektrische System lässt sich folgendermaßen nutzen:
In einem ersten Betriebsmodus ist die elektrische Generator-/Motoreinheit 30 im Sinne eines Generators betreibbar. Der Generator 30 wird mit dem Eingangsgetriebe 12 in Antriebsverbindung gebracht. Auf diese Weise lässt sich kinetische Energie, die der sich in einem Antriebszustand befindende Antriebsstrang 10 innehat, dazu nutzen, den Generator 30 anzutreiben. Der Generator 30 erzeugt elektrische Spannung, die über die elektrische Leitung 31 an die elektrische Regel- und Speichereinheit 32 übertragen und darin als elektrische Energie gespeichert wird. Der im Generator 30 bei der Spannungserzeugung auftretende Widerstand bewirkt ein Abbremsen des Antriebsstrangs 10 auf null (oder auf einen gewünschten Wert größer null).
In einem zweiten Betriebsmodus (Energierückgewinnungsmodus), der bei Bedarf wie beispielsweise nach Behebung einer Überlast aktivierbar ist, wird die elektrische Generator-/Motoreinheit 30 im Sinne eines Motors betrieben. Der Motor 30 wird dazu wieder mit dem Eingangsgetriebe 12 in Antriebsverbindung gebracht. Die in der elektrischen Speichereinheit 32 gespeicherte elektrische Energie wird nun dazu genutzt, über die Leitungen 31 den Motor 30 und damit den Antriebsstrang 10 anzutreiben. Auf diese Weise lässt sich die in der Speichereinheit 32 gespeicherte elektrische Energie dazu nutzen, den Antriebsstrang 10 wieder zu beschleunigen, um einen vorigen Antriebszustand - zumindest annähernd (Reibungsverluste werden stets zu einem gewissen Verlust führen) - wiederherzustellen.

Die in den Fig. 3 und 4 gezeigten Systeme zur Zwischenspeicherung und Rückgewinnung ("Rekuperation") von Energie unterscheiden sich somit im Wesentlichen in der Art der Wandlung der Energie. Dabei zeigt Fig. 3 eine mechanisch-hydraulische Lösung, während Fig. 4 eine mechanisch-elektrische Lösung zeigt. Alternativ zu den beiden gezeigten Lösungen wäre auch eine mechanisch-mechanische Lösung denkbar, bei welcher die kinetische Energie des Antriebsstrangs 10 beispielsweise zur (reversiblen) Verformung eines elastischen Elements ("Feder") genutzt wird, das dann als Energiespeicher dient. Andere physikalische Prinzipien für eine Zwischenspeicherung mit der Möglichkeit der Rückgewinnung von Energie sind denkbar.

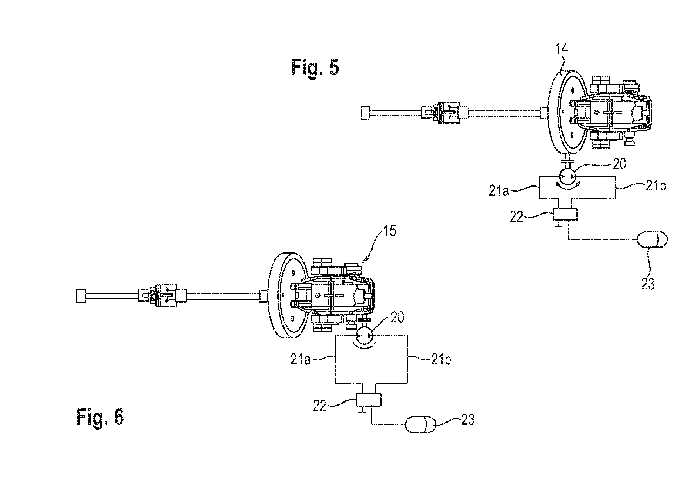

Während bei dem in den Fig. 3 und 4 dargestellten Antriebsstrang 10 die jeweils zum Einsatz kommende Umformeinrichtung (Pumpe/Motor 20 bzw. Generator/Motor 30) am Eingangsgetriebe 12 des Antriebsstrangs 10 angeordnet ist, sind dafür auch andere Einbauorte möglich. Denkbare andere Einbauorte sind in den Beispielen gemäß Fig. 5 und 6 dargestellt.

In Fig. 5 ist der Antriebsstrang 10 einer Ballenpresse 1 mit hydraulischer Energierückgewinnung gezeigt, bei dem die Umformeinrichtung (Pumpe/Motor 20) am Schwungrad 14 angeordnet ist. Im Übrigen gleichen der Aufbau und die Funktion des hydraulischen Systems dem in Fig. 3 gezeigten System, wozu auf die dortigen Ausführungen verwiesen wird.

In Fig. 6 ist der Antriebsstrang 10 einer Ballenpresse 1 mit hydraulischer Energierückgewinnung gezeigt, bei dem die Umformeinrichtung (Pumpe/Motor 20) am Hauptgetriebe 15 angeordnet ist. Im Übrigen gleichen der Aufbau und die Funktion des hydraulischen Systems dem in Fig. 3 gezeigten System, wozu auf die dortigen Ausführungen verwiesen wird.

Bei bekannten Ballenpressen 10 ist zwischen Schwungrad 14 und Hauptgetriebe 15 (vgl. Fig. 2) oftmals eine Sollbruchstelle vorgesehen (beispielsweise als Scherbolzen ausgeführt), um im Überlastfall beispielsweise des Rotors 4 und/oder Raffers 5 Beschädigungen an der Ballenpresse 1 zu vermeiden. Für eine Ballenpresse mit einer solchen Sollbruchstelle zwischen Schwungrad 14 und Hauptgetriebe 15 weisen die Anordnungen gemäß den Fig. 3 bis 5 gegenüber der Variante gemäß Fig. 6 den Vorteil auf, dass im Fall eines Sollbruchs eine Nutzung der kinetischen Energie weiterhin möglich ist, da bei diesen Anordnungen das Schwungrad 14 - trotz Sollbruchs - noch immer mit dem Teil des Antriebsstrangs 10 in Verbindung steht, der die Umformeinrichtung 20, 30 antreiben kann.

Die in den Fig. 5 und 6 gezeigten Varianten (Einbauorte Schwungrad 14 bzw. Hauptgetriebe 15) sind im Zusammenhang mit einem mechanisch-hydraulischen System gezeigt. Es sei darauf hingewiesen, dass für diese Einbauorte gleichermaßen ein mechanisch-elektrisches System, wie anhand von Fig. 4 beschrieben, oder ein mechanisch-mechanisches System (Federspeicher) zum Einsatz kommen kann.

### Bezugszeichenliste

- 1: Quaderballenpresse
- 2: Pickup
- 3: Rotor
- 4: Raffer
- 5: Presskolben
- 6: Knoteinrichtung
- 7: Erntegut
- 8: Traktor
- 9: Zapfwellenabtrieb
- 10: Antriebsstrang
- 11: Eingangswelle
- 12: Eingangsgetriebe
- 13: Gelenkwelle
- 14: Schwungrad
- 15: Hauptgetriebe
- 16: Presskammer
- 17: Quaderballen
- 20: hydrostatische Pumpe-/Motoreinheit
- 21a: hydraulische Leitung
- 21b: hydraulische Leitung
- 22: Regeleinheit
- 23: hydraulische Speichereinheit
- 30: elektrische Generator-/Motoreinheit
- 31: elektrische Leitung
- 32: elektrische Regel- und Speichereinheit
- v: Geschwindigkeit

## Patentansprüche

1. Landwirtschaftliche Ballenpresse, insbesondere Quaderballenpresse (1) mit zumindest einem Arbeitsaggregat (2, 3, 4, 5, 6) zur Verarbeitung und/oder Förderung von Erntegut (7), wobei das Arbeitsaggregat (2, 3, 4, 5, 6) mittels eines Antriebsstrangs (10) antreibbar ist,
**gekennzeichnet durch** Energiewandlungsmittel (20; 30), mit denen sich kinetische Energie, die das Arbeitsaggregat (2, 3, 4, 5, 6) und/oder der Antriebsstrang (10) in einem Antriebszustand innehat, zumindest teilweise in eine speicherbare Energieform umformen lässt, sowie einen Energiespeicher (23; 32) zur Speicherung der so gewandelten Energie.

2. Ballenpresse nach Anspruch 1, **dadurch gekennzeichnet, dass** die Energiewandlungsmittel eine Umformeinrichtung (20; 30) umfassen, die mit einer Komponente (12, 14, 15) des Antriebsstrangs (10) und/oder des Arbeitsaggregats (2, 3, 4, 5, 6) in Antriebsverbindung bringbar ist, um kinetische Energie des Antriebsstrangs (10) und/oder des Arbeitsaggregats (2, 3, 4, 5, 6) in die speicherbare Energieform umzuformen.

3. Ballenpresse nach Anspruch 2, **dadurch gekennzeichnet, dass** es sich bei der Komponente des Antriebsstrangs (10) um ein Eingangsgetriebe (12), ein Schwungrad (14) oder ein Hauptgetriebe (15) der Ballenpresse (1) handelt.

4. Ballenpresse nach Anspruch 2 oder 3, **dadurch gekennzeichnet, dass** die Umformeinrichtung als eine Hydropumpe (20), eine Pneumatikpumpe, ein elektrischer Generator (30) und/oder ein mechanisches Getriebe nutzbar ist und es sich bei dem Energiespeicher entsprechend um einen hydraulischen Druckspeicher (23), einen pneumatischen Druckspeicher, einen elektrischen Energiespeicher (32) und/oder einen mechanischen Energiespeicher handelt.

5. Ballenpresse nach einem der vorigen Ansprüche, **dadurch gekennzeichnet, dass** der Antriebsstrang (10) zum Antrieb eines oder mehrerer der folgenden Arbeitsaggregate dient: Pickup (2), Rotor (3), Raffer (4), Presskolben (5), Knoteinrichtung (6).

6. Ballenpresse nach einem der vorigen Ansprüche, **dadurch gekennzeichnet, dass** der Antriebsstrang (10) die folgenden Komponenten umfasst:
eine Wellenanordnung (11,13), die eingangsseitig mit einer Antriebsmaschine, insbesondere mit einem Zapfwellenabtrieb (9) beispielsweise eines Traktors (8) kuppelbar ist, um von der Antriebsmaschine (8) angetrieben zu werden,
ein mit der Wellenanordnung (11, 13) in Antriebsverbindung stehendes Schwungrad (14),
ein über die Wellenanordnung (11, 13) antreibbares Hauptgetriebe (15), das insbesondere dazu dient, eine eingehende mechanische Leistung auf eine oder mehrere Ausgangsleistungen zum Antrieb des zumindest einen Arbeitsaggregates (2, 3, 4, 5, 6) zu verzweigen.

7. Ballenpresse nach einem der vorigen Ansprüche, **gekennzeichnet durch** Mittel zur ereignisabhängigen Einleitung der Wandlung kinetischer Energie des Antriebsstrangs (10) und/oder des Arbeitsaggregats (2, 3, 4, 5, 6) in speicherbare Energie mit dem Ziel, den Antriebsstrang (10) und/oder das Arbeitsaggregat (2, 3, 4, 5, 6) abzubremsen.

8. Ballenpresse nach einem der vorigen Ansprüche, **dadurch gekennzeichnet, dass** die Energiewandlungsmittel (20; 30) in einem Energierückgewinnungsmodus betreibbar sind, um dem Energiespeicher (23; 32) zugeführte Energie zurückzuwandeln in kinetische Energie des Antriebsstrangs (10) und/oder des Arbeitsaggregats (2, 3, 4, 5, 6), um einen Antriebszustand wiederherzustellen.

9. Ballenpresse nach Anspruch 8, **dadurch gekennzeichnet, dass** die Umformeinrichtung (20; 30) im Energierückgewinnungsmodus mit einer Komponente (12, 14, 15) des Antriebsstrangs (10) und/oder des Arbeitsaggregats (2, 3, 4, 5, 6) in Antriebsverbindung bringbar ist und sich als ein Hydromotor (20), ein Pneumatikmotor, ein elektrischer Motor (30) und/oder ein mechanisches Getriebe nutzen lässt, insbesondere um den Antriebsstrang (10) und/oder ein Arbeitsaggregat (2, 3, 4, 5, 6) damit anzutreiben.
